# EUROPEAN PATENT APPLICATION

(11) **EP 1 679 511 A1**
(43) Date of publication of application: **12.07.2006**
(21) Application number: 04793215.7
(22) Date of filing: 29.10.2004
(51) Int. Cl.: G01N 27/72, G01N 23/04, G01V 3/11

(54) **HYBRID TYPE FOREIGN MATTER DETECTOR AND ITS TRACEABILITY-USE SYSTEM**

(30) Priority: 30.10.2003 JP 2003370300
(71) Applicant: TOK Engineering Co. Ltd., Nishitama-gun, Tokyo 190-1222 (JP)
(72) Inventor: KONDO, Nobukazu; c/o Tok Engineering Co., Ltd., Nishitama-gun, Tokyo;1901222 (JP)
(74) Representative: Steinmeister, Helmut
(86) International application number: PCT/JP2004/016107
(87) International publication number: WO 2005/043149

(57) **Abstract**

A hybrid type foreign matter detecting apparatus (1) includes magnet boosters (5), an X-ray detector (7), and sensor coils (8). When metallic foreign matter mixed in an object (6) under inspection transferred by a belt conveyor (4) passes through the magnet boosters (5), the magnetic properties of the foreign matter are enhanced so that the foreign matter is easy to detect with the sensor coils (8). X-rays generated from the X-ray detector (7) are focused in a region where the sensitivity of the sensor coils (8) is the lowest, whereby metallic foreign matter mixed in either of the surface and center portions of inspection objects can be detected satisfactorily.

## Description

### Technical Field:

The present invention relates to a foreign matter detecting system for detecting foreign matter mixed in an object under inspection. More particularly, the present invention relates to a foreign matter detecting apparatus for detecting foreign matter, including metallic foreign matter, mixed in an object under inspection packaged with a metallic material, e.g. aluminum, and also relates to a traceability system using the foreign matter detecting apparatus.

### Background Art:

In the process of producing foods, pharmaceuticals, etc., various machines are used, such as a conveying machine, a cleaning machine, a stirring machine, a cutting machine, a kneader, and a steamer. Containers, cutters, sieves and so forth of these machines may wear away or crack due to metal fatigue. Accordingly, pieces of metal may enter products as foreign matter owing to peeling, rupture, separation, shaving, or chipping. It is important to detect and remove such foreign matter. As a means for detecting metallic foreign matter mixed in an object under inspection, a system using electromagnetic wave type sensor coils has been proposed.

The conventional electromagnetic wave type sensor coil system is prone to cause detection errors when inspecting liquid food products having a high-concentration salt solution. The reason for this may be due to the fact that when an electromagnetic wave generated from the sensor coil system strikes the high-concentration salt solution, a high-frequency electric current flows through the solution. For this reason, the sensitivity of the sensor coil system has to be lowered to a considerable extent when such a liquid food product is inspected. Lowering the sensor coil sensitivity makes it impossible to detect metallic foreign matter in food, disadvantageously.

X-ray systems and the like are used to inspect liquid food products having a high-concentration salt solution, non-metals, and non-magnetic metals. Metallic foreign matter is, in many cases, austenite stainless steel used to constitute the containers, cutters, sieves and so forth of the above-described various machines. When austenite stainless steel is plastically deformed, martensitic transformation is induced, and it changes into a crystal structure having weak magnetic properties.

Therefore, detection with high sensitivity can be performed in the vicinity of the sensor coils by using magnet boosters to intensify the response of the magnetic lines of force. When an object under inspection passes between the magnet boosters, the magnetism is oriented to a given direction by the magnetizing action of the magnet boosters, whereby a weak magnetic material to be detected, such as martensiticly transformed austenite stainless steel, is magnetized.

Patent document 1 discloses a method and apparatus for detecting magnetic and non-magnetic foreign matter by using the magnet boosters. When an AC voltage is applied between a pair of sensor coils formed by winding copper coil wire around E-shaped iron cores or the like, alternating magnetic fields are produced. In this case, the pair of sensor coils are connected to form a balanced or non-balanced bridge circuit. The output current from the bridge circuit is constant as long as the alternating magnetic fields remain unchanged.

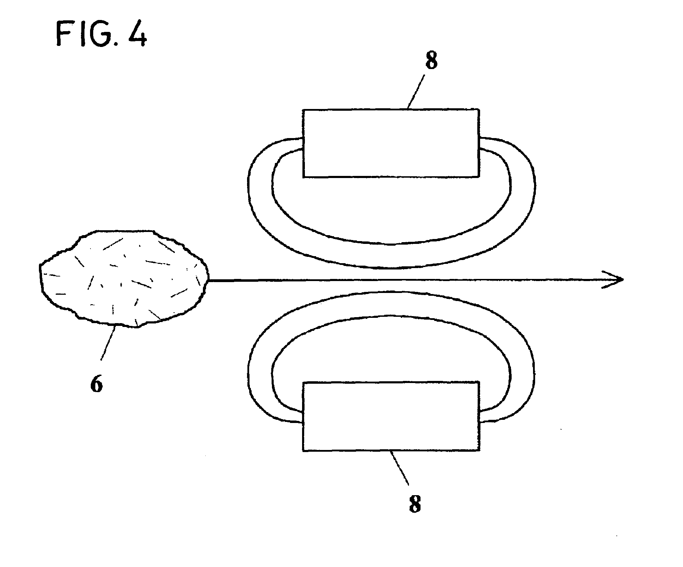

As shown in Fig. 4, when an object 6 under inspection containing magnetic or magnetized metallic foreign matter passes between a pair of sensor coils 8 (upper and lower) producing alternating magnetic fields, the formation of the magnetic lines of force of the alternating magnetic fields is disturbed. At this time, the electric current flowing through the sensor coils changes, and the output voltage from the balanced or non-balanced bridge circuit changes. The metallic foreign matter can be detected from the change in the output signal voltage.

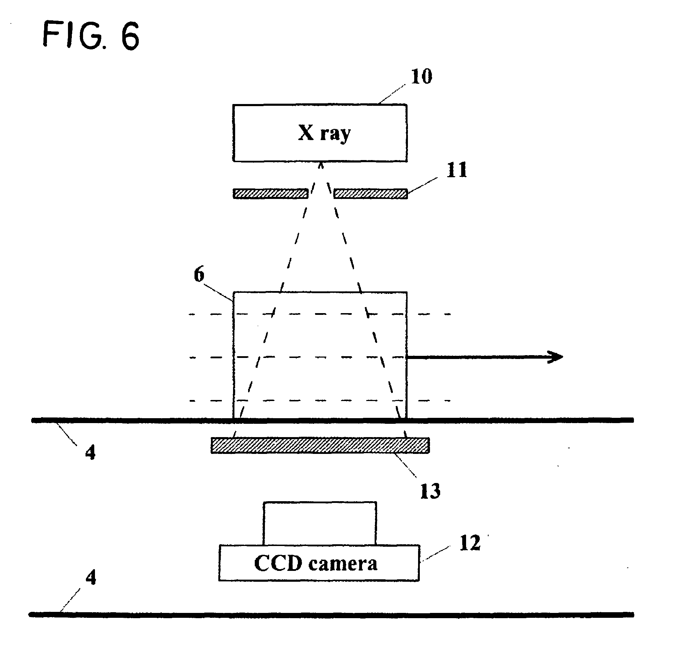

Fig. 6 illustrates the outline of a process of detecting foreign matter by using an X-ray system. The X-ray system is basically arranged as follows. An X-ray generator 10 produces an X-ray beam that passes through a slit 11 to irradiate an object 6 under inspection. The X-ray beam transmitted through the inspection object 6 is received with a reception system. The inspection object 6 is transferred by a belt conveyor 4.

The reception system comprises a fluorescent screen 13 and a CCD camera 12. A portion of the fluorescent screen 13 that is irradiated with the X-rays transmitted through the inspection object 6 produces light. The light is imaged with the CCD camera 12. The image picked up with the CCD camera 12 is subjected to image processing at a subsequent process step to detect foreign matter.

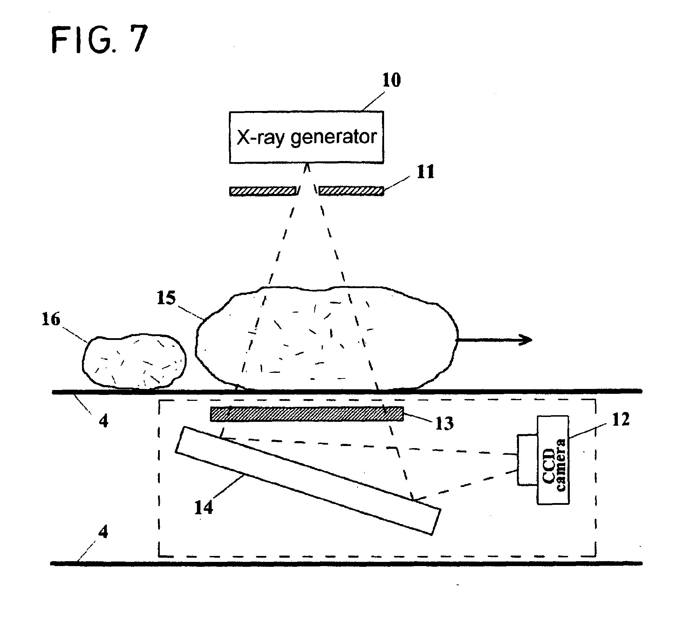

Further, as shown in Fig. 7, objects 15 and 16 under inspection are transferred by the belt conveyor 4, and an X-ray beam is passed therethrough. At this time, the X-ray beam transmitted through the inspection objects 15 and 16 is reflected by a mirror 14 and then imaged with the CCD camera 12. If the transmitted X-ray beam is continuously imaged with the CCD camera 12, the position of foreign matter continuously changes as the inspection objects 15 and 16 move.
Patent document 1: WO 03/027659 A1

### Disclosure of the Invention

### Problem to be Solved by the Invention:

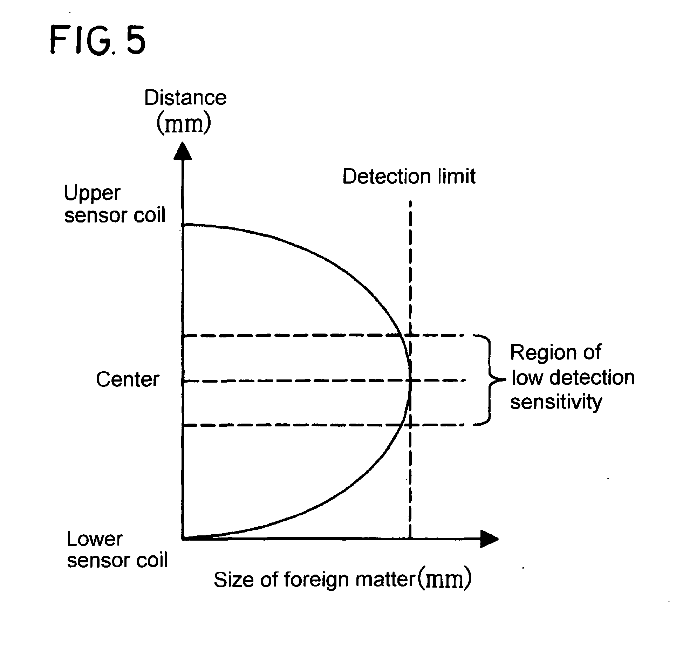

The sensor coil system comprising a pair of sensor coils 8 suffers, however, from the disadvantage that as the position of foreign matter moves away from the sensor coil surface, the detection sensitivity lowers. Fig. 5 is a graph showing the sensitivity of sensor coils. Metallic foreign matter can be detected with high sensitivity near either of the upper and lower sensor coils 8, which are a pair of sensor coils 8 constituting a sensor coil system.

The reason for this is that when metallic foreign matter is near either of the sensor coils 8, the alternating magnetic fields produced from the sensor coils 8 are disturbed by the metallic foreign matter, so that the response of the magnetic lines of force changes to a considerable extent. In contrast, when metallic foreign matter is at or near the center between the pair of sensor coils 8, the response of the magnetic lines of force is small, and hence the change in the output electric current is small. Accordingly, the detectable metallic foreign matter size is unfavorably large.

The X-ray beam emitted from the X-ray generator 10 has an angle of divergence. The X-ray beam passes through the inspection object 6 while diverging conically before irradiating the fluorescent screen 13. As shown in Fig. 6, if the object 6 is inspected at a given position or instantaneously with the conical X-ray beam, some portions of the object 6, e.g. the upper corners thereof, may fail to be subjected to inspection.

As shown in Fig. 7, when there are variations in the size of inspection objects and differences in thickness between the central and end portions thereof as in the case of the inspection objects 15 and 16, the detection sensitivity varies depending on the position, thickness and contents of each individual inspection object. Thus, the X-ray system suffers from the disadvantage that it is necessary to perform imaging with the CCD camera 12 according to the size, thickness and contents of each individual inspection object. In addition, when X-rays are applied to a narrow piece of foreign matter in the longitudinal (axial) direction thereof, the X-ray irradiated area is small, and hence the detection sensitivity lowers. In such a case, the X-ray system may fail to detect the foreign matter.

In a case where an object under inspection is packaged with a metallic material, e.g. aluminum, or in the case of an inspection object having a high X-ray absorptivity packaging material or contents (i.e. a material of high density), the X-ray intensity needs to be sufficiently high. Accordingly, X-rays passing through the packaging material may also pass through metallic foreign matter, resulting in a failure to detect the foreign matter. Similarly, in the case of an inspection object that presents an irregular shape with respect to the X-ray irradiation direction and has large thickness variations, metallic foreign matter is undesirably absorbed by the density of the inspection object, and it becomes impossible to detect the foreign matter.

The intensity of X-rays generated from the X-ray system is set to a value at which the X-rays can pass through the packaging material and the contents. Therefore, the foreign matter detection sensitivity is limited by the X-ray absorptivity of the packaging material and the contents. That is, if the X-ray absorptivity of the packaging material or the contents is high, it may be difficult or impossible to detect foreign matter. Although the sensor coil system has the disadvantage that as the position of foreign matter moves away from the sensor coil surface, the detection sensitivity lowers, it has detecting properties that are entirely independent of the thickness of the packaging material and of the contents. Thus, the advantages and disadvantages of the X-ray system and those of the sensor coil system are complementary to each other. That is, the two systems can compensate for each other's disadvantages.

A hybrid system constructed by functionally combining together the advantages of the two systems is capable of idealistic detection of foreign matter mixed in foods, etc. packaged in metal packages. Meanwhile, traceability is regarded as important, which is the ability to trace and follow food products and information concerning them through all stages of production, processing and distribution by registering and storing items of record, such as the source of raw material, the manufacturer, and the distributor, at each stage of production, processing and distribution. Traceability makes it easy to track down the cause of problems in terms of safety of food products and facilitates the tracing and withdrawal of problematic food products, thereby ensuring consumers' confidence in the safety, quality and labeling of food products. For this purpose, it is important to keep track of each individual commodity product for each production line.

When foreign matter is mixed in a food product, it is essential to determine from which production line the foreign matter got mixed into the food product. For example, when it is found by a foreign matter detecting apparatus that foreign matter, e.g. a fragment of stainless steel, is mixed in a manufactured food product, it is important to track down a production line assumed to be a source of mixing in of the stainless steel fragment, and to apply feedback to the production line.

With the above-described technical background, the present invention was made to attain the following objects.
An object of the present invention is to provide a hybrid type foreign matter detecting apparatus implemented by combining together the magnetic type foreign matter detecting function and the X-ray type foreign matter detecting function.
Another object of the present invention is to provide a hybrid type foreign matter detecting apparatus capable of satisfactorily detecting magnetic and non-magnetic metal foreign matter and non-metallic foreign matter mixed in either of the surface and center portions of inspection objects packaged in metal packages.
Still another object of the present invention is to provide a traceability system having a hybrid type foreign matter detecting apparatus, in which foreign matter mixed in a commodity under inspection is detected by using the hybrid type foreign matter detecting apparatus, and it is made clear from which production line the foreign matter got mixed into the commodity by analysis of image information obtained by X-rays and analysis of magnetic response information obtained from sensor coils.

### Means for Solving the Problem

To attain the above-described objects, the present invention adopts the following means.
A hybrid type foreign matter detecting apparatus according to a first feature of the present invention comprises conveying means for transferring an object under inspection; magnetizing means for magnetizing magnetic foreign matter in foreign matter mixed in the object under inspection; an X-ray system for detecting whether or not the foreign matter is present in the object under inspection, which includes X-ray generating means for generating X-rays from a cathode and an anode that are put in a vacuum tube, and X-ray receiving means for receiving the X-rays transmitted through the object under inspection; electromagnetic wave detection means having a pair of sensor coils for detecting whether or not the magnetic foreign matter is present in the object under inspection; and signal processing means for detecting the foreign matter by parallel processing an output signal from the sensor coils and an X-ray system output signal from the X-ray system.

According to a second feature of the present invention, the X-ray generating means and the X-ray receiving means of the hybrid type foreign material detecting apparatus according to the first feature of the present invention are disposed on a single oscillating axis so that the object under inspection is inspected at an angle to the vertical axis by tilting the oscillating axis.

According to a third feature of the present invention, the X-ray generating means of the hybrid type foreign material detecting apparatus according to the first or second feature of the present invention is magnetically shielded by a ferromagnetic material to prevent the cathode and the anode from being influenced by the magnetic field produced by the magnetizing means.
According to a fourth feature of the present invention, the X-ray system of the hybrid type foreign material detecting apparatus according to any of the first to third features of the present invention is disposed between the magnetizing means and the electromagnetic wave detection means.

According to a fifth feature of the present invention, the X-ray generating means of the hybrid type foreign material detecting apparatus according to the first feature of the present invention generates X-rays having an intensity, wavelength and spectral line width optimized so that the foreign matter as located in the vicinity of the vertical center between the pair of sensor coils can be detected.

According to a sixth feature of the present invention, the X-ray generating means of the hybrid type foreign matter detecting apparatus according to the second feature of the present invention is installed below the conveying means, and the X-ray receiving means is installed above the conveying means. The oscillating axis is tilted at a predetermined angle (θ) from the vertical direction to inspect the object under inspection.

According to a seventh feature of the present invention, the pair of sensor coils of the hybrid type foreign matter detecting apparatus according to the first feature of the present invention are connected to form a balanced or non-balanced bridge circuit. An AC voltage is applied to the bridge circuit, causing the sensor coils to produce alternating magnetic fields. When the magnetic foreign matter passes near the sensor coils, the alternating magnetic fields change. Consequently, the output current/voltage of the bridge circuit changes to deliver a sensor coil output signal.

According to an eighth feature of the present invention, the sensor coils of the hybrid type foreign matter detecting apparatus according to the seventh feature of the present invention uses an excitation power source that supplies an electric current of such a frequency and a magnetic field intensity that no eddy current is induced in a metal package used to package the object under inspection.

A traceability system according to a ninth feature of the present invention has the hybrid type foreign matter detecting apparatus according to any of the first to eighth features of the present invention. The traceability system comprises a database for previously storing data concerning a production process for producing a commodity, production machine facilities used for production of the commodity, and materials used for production of the commodity, and for registering, whenever necessary, information concerning the object under inspection and/or the foreign matter. The traceability system further comprises a computer that analyzes the information concerning the object under inspection and/or the foreign matter by using the above-described data alone or in liaison with another traceability system to implement traceability to trace the history of production of the commodity.

### Advantageous Effects of the Invention:

The present invention offers the following advantageous effects.
The present invention combines together the X-ray system and the magnetic sensor coils to inspect an object under inspection and therefore makes it possible to satisfactorily detect foreign matter wherever it is located in the object under inspection.

The hybrid type foreign matter detecting apparatus according to the present invention can achieve space saving by disposing the X-ray system between the magnet boosters and the sensor coils. Further, even in the case of metallic foreign matter so small that it fails to be detected with X-rays set to a sufficiently high intensity to pass through the packaging material and the contents, it is possible to detect the mixed metallic foreign matter by the sensor coils.

The X-ray generator and the X-ray receiver are disposed on a single axis and designed to be tiltable at a predetermined angle θ from the vertical direction. The degree of the tilt angle can be adjusted according to the kind of the contents of the object under inspection and the kind and shape of the packaging material. Therefore, even when X-rays are applied to the object under inspection in the longitudinal (axial) direction thereof, it is possible to inspect the object without reducing the detection sensitivity.

The traceability system having the hybrid type foreign matter detecting apparatus according to the present invention enables tracing of the process in which foreign matter got mixed in an object under inspection from various items of information stored in the database by image information analysis of the foreign matter using X-rays and magnetic response information analysis using sensor coils.

### Best Mode for Carrying Out the Invention

### [First Embodiment]

The best mode for carrying out the present invention will be described below specifically with reference to the accompanying drawings.

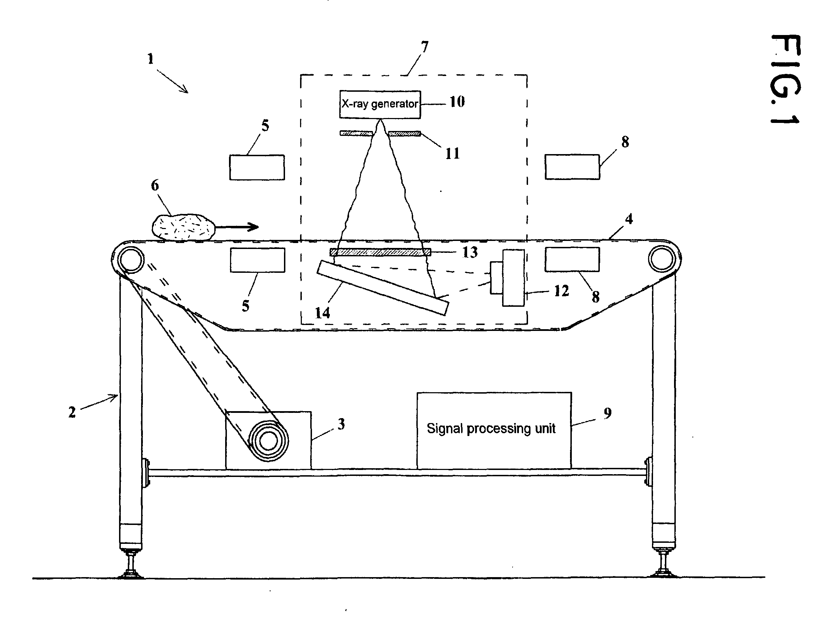

Fig. 1 illustrates the outline of a hybrid type foreign matter detecting apparatus according to a first embodiment of the present invention. The foreign matter detecting apparatus 1 comprises a support table 2, a driving motor 3, a belt conveyor 4, magnet boosters 5, an X-ray detector 7, sensor coils 8, and a signal processing unit 9. The magnet boosters 5 and the sensor coils 8 are provided in pairs, respectively. One and the other of the pair of magnet boosters 5 are respectively installed above and below the belt conveyor 4 with a gap provided between the upper and lower magnet boosters 5 so that an inspection object 6 can pass therebetween. Similarly, one and the other of the pair of sensor coils 8 are respectively installed above and below the belt conveyor 4 with a gap provided between the upper and lower sensor coils 8 so that the inspection object 6 can pass therebetween.

The magnet boosters 5, the X-ray detector 7 and the sensor coils 8 are disposed in the same line along the belt conveyor 4 in the order mentioned in a direction in which the inspection object 6 is transferred. The support table 2 supports the foreign matter detecting apparatus 1 and has four legs at the bottom thereof. The support table 2 is made of a non-magnetic metal, e.g. stainless steel, and has a plate for installing the signal processing unit 9 and the driving motor 3 under the belt conveyor 4. The driving motor 3 drives the belt conveyor 4 to rotate.

The belt conveyor 4 transfers the inspection object 6 so that the object 6 passes successively through the magnet boosters 5, the X-ray detector 7 and the sensor coils 8. The magnet boosters 5 are formed from strong magnets to enhance the magnetic properties of metallic foreign matter. Magnetic fields produced from the magnet boosters 5 act on metallic foreign matter, e.g. plastically deformed austenite stainless steel having weak magnetic properties, causing the magnetic moments thereof to be oriented in a given direction, thereby enhancing the magnetic properties so that the foreign matter is easy to detect with the sensor coils 8.

In the X-ray detector 7, X-rays are generated and passed through the inspection object 6. The transmitted X-rays are received with a detecting screen, e.g. a fluorescent screen 13. Light produced from the fluorescent screen 13 is imaged with a CCD camera 12 or the like. Image obtained from the CCD camera 12 is image-processed in the signal processing unit 9 in the subsequent stage to detect foreign matter mixed in the inspection object 6.

Each sensor coil 8 has a structure formed by winding a copper coil wire around an E-shaped iron core. When an AC voltage is applied thereto, the sensor coil 8 produces an alternating magnetic field. The pair of sensor coils 8 are connected on two sides of a bridge circuit. When a fixed AC voltage is applied to the bridge circuit, there is no change in the electric current flowing through the bridge circuit, and the output current from the bridge circuit is constant. When a magnetic material passes in the neighborhood of the sensor coils 8, the formation of the alternating magnetic fields is disturbed, and the output current from the bridge circuit changes.

The output current at this time is signal-processed in the signal processing unit 9 in the subsequent stage and detected as foreign matter in the inspection object 6. The signal processing unit 9 comprises two parts to perform hybrid detection of foreign matter. In one part of the signal processing unit 9, signals from the sensor coils 8 are processed to detect foreign matter. In the other part of the signal processing unit 9, an image from the X-ray detector 7 is received and processed to detect foreign matter. The inspection object 6 is transferred on the belt conveyor 4.

The inspection object 6 transferred by the belt conveyor 4 first passes through the magnet boosters 5 and then passes through X-rays produced from the X-ray detector 7. Thereafter, the object 6 passes through the sensor coils 8. The transfer speed of the belt conveyor 4 is adjustable within a predetermined range. When the inspection object 6 passes through magnetic fields produced from the magnet boosters 5, possible metallic foreign matter in the inspection object 6 is magnetized.

The X-ray detector 7 comprises an X-ray generator 10, a slit 11, a reception system, etc. The reception system includes a fluorescent screen 13, a mirror 14, and a CCD camera 12. X-rays generated from the X-ray generator 10 are focused through the slit 11 to irradiate the inspection object 6. X-rays transmitted through the object 6 are applied to the fluorescent screen 13. When irradiated with X-rays, the fluorescent screen 13 produces light. The light is reflected by the mirror 14 and imaged with the CCD camera 12.

On the image of the inspection object 6 picked up by the CCD camera 12, metallic foreign matter appears black. As the object 6 moves, the metallic foreign matter moves, leaving a black shadow. The intensity of X-rays output from the X-ray generator 10 and the aperture of the slit 11 are optimally set so that it is possible to detect foreign matter that is located at or near the center between the upper and lower sensor coils 8, where the sensitivity of the sensor coils 8 is lowest.

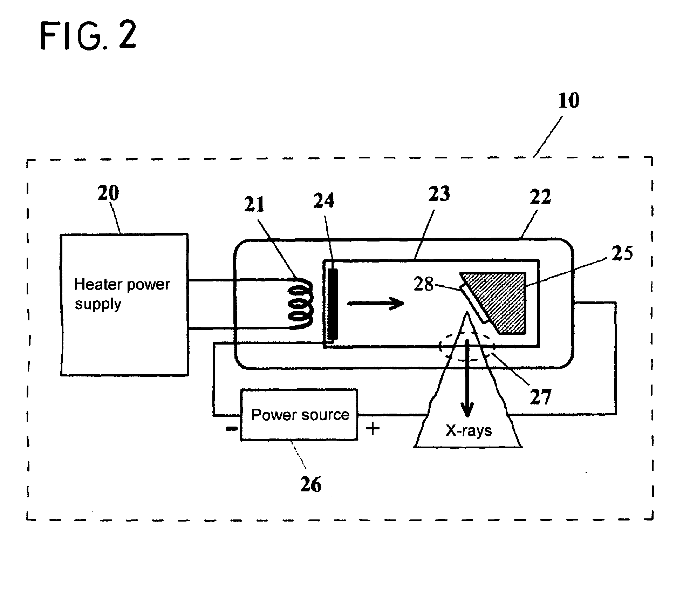

Fig. 2 illustrates the arrangement of the X-ray generator 10. The X-ray generator 10 comprises a heater power supply 20, an X-ray tube 22, a power source 26, etc. The X-ray tube 22 includes a heater coil 21, a cathode (negative electrode) 24, and an anode (positive electrode) 25. The cathode 24 and the anode 25 are sealed in a nickel tube 23. The nickel tube 23 is covered with a nickel coating and provided with a window 27 for passing X-rays generated therein.

A negative electrode (minus electrode) of the power source 26 is connected to the cathode 24. A positive electrode (plus electrode) of the power source 26 is connected to the anode 25. Electrons emitted from the cathode 24 are accelerated to bombard the anode 25. When the heater coil 21 is heated by the heater power supply 20 to raise the cathode 24 to a high temperature, electrons are emitted from the cathode 24 and accelerated to fly toward the anode 25. When the electrons strike a target 28 on the surface of the anode 25, X-rays are generated.

The X-rays generated in this way exit the nickel tube 23 through the window 27 and are applied to an object under inspection. Tungsten is used as the target 28. The X-ray tube 22 is magnetically sealed with a ferromagnetic material so that the cathode 24 and the anode 25 are not influenced by the magnet boosters 5 and do not influence the sensor coils 8.

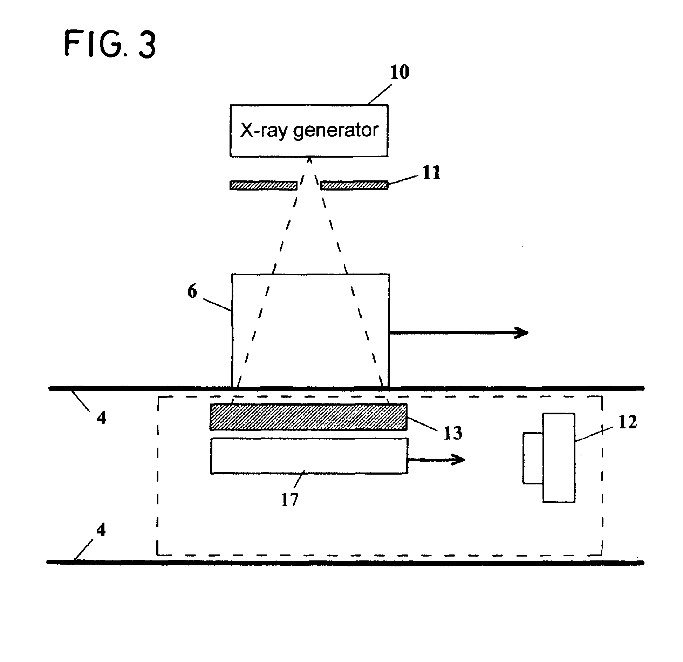

Fig. 3 illustrates another example of the reception system. X-rays generated from the X-ray generator 10 pass through the slit 11 and the inspection object 6 and irradiate the fluorescent screen 13. A portion of the fluorescent screen 13 that is irradiated with the X-rays produces light. The light enters an acrylic resin 17 provided under the fluorescent screen 13. The light repeats total reflection in the acrylic resin 17 and exits from a side thereof and then enters the CCD camera 12.

### [Second Embodiment]

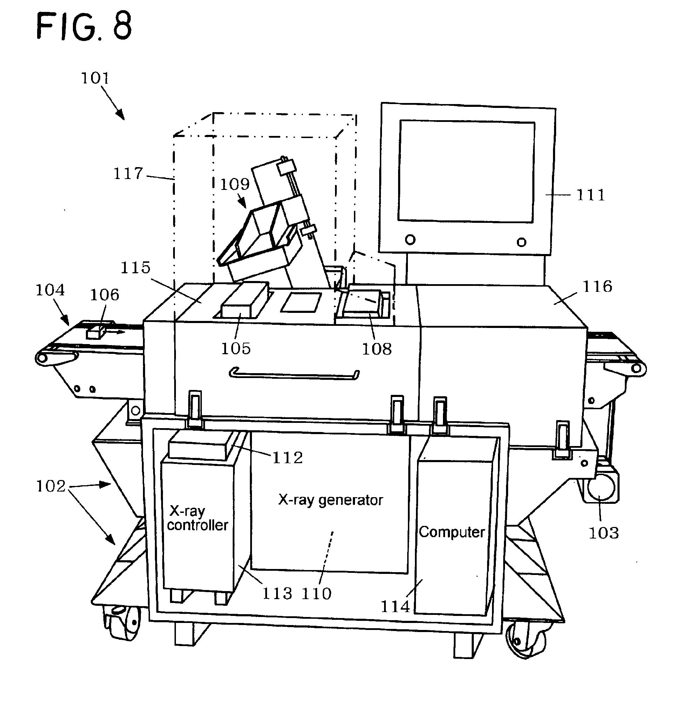

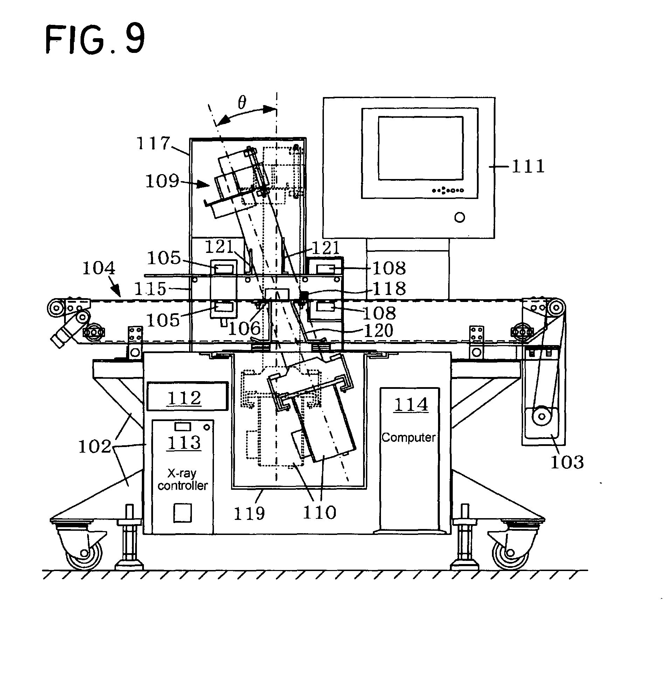

A second embodiment of the present invention will be described below specifically with reference to the drawings. Figs. 8 and 9 illustrate the outline of a hybrid type foreign matter detecting apparatus 101. The foreign matter detecting apparatus 101 comprises a support table 102, a driving motor 103, a belt conveyor 104, magnet boosters 105, sensor coils 108, a line sensor camera 109, an X-ray generator 110, a display 111, a line sensor controller 112, an X-ray controller 113, a computer 114, etc. The X-ray detector comprises the X-ray generator 110, the X-ray controller 113, the line sensor camera 109, and the line sensor controller 112.

The support table 102 has four wheels and supports the whole hybrid type foreign matter detecting apparatus 101. The frame of the belt conveyor 104, the magnet boosters 105, the X-ray detector, the sensor coils 108 and so forth are installed on the top of the support table 102. The support table 102 has a plate for installing the computer 114, the line sensor controller 112 and the X-ray controller 113 under the belt conveyor 104.

The belt conveyor 104 transfers an inspection object 106 so that the object 106 passes successively through the magnet boosters 105, the X-ray detector and the sensor coils 108. The sensor coils 108 generate alternating magnetic fields when an AC voltage is applied thereto. The computer 114 performs signal processing based on signals from the line sensor controller 112, the X-ray controller 113 and the sensor coils 108 to detect whether or not foreign matter is mixed in the inspection object 106.

The X-ray generator 110 generates X-rays. The X-ray generator 110 has a cathode and an anode magnetically sealed with a ferromagnetic material so as to be free from the influence of the magnetic fields of the magnet boosters 105. The X-ray controller 113 controls the X-ray generator 110. The line sensor camera 109 receives X-rays generated from the X-ray generator 110 and transmitted through the inspection object 106. The X-rays pass through a slit provided in the chassis of the belt conveyor 104 and further pass through the inspection object 106 and then impinges on the light-receiving part of the line sensor camera 109.

The line sensor controller 112 controls the sensitivity of the line sensor camera 109 and the vertical movement of the line sensor camera 109. The line sensor controller 112 also has the function of transferring data received with the line sensor camera 109 to the computer 114. The line sensor controller 112 is connected to an interface board (not shown) built in the computer 114 through a communication cable or the like to perform data transmission and reception.

The transferred data is image-processed in the computer 114 to display an image on the display 111 and also used to judge the presence of foreign matter mixed in the inspection object 106. The X-ray generator 110 and the line sensor camera 109 are mounted on the same frame. The frame has a pivot shaft (not shown) provided in the longitudinal center thereof. The pivot shaft is pivotably supported by the support table 102 through a bearing. The foreign matter detecting apparatus 101 has a locking mechanism (not shown) that tilts the frame equipped with the X-ray generator 110 and the line sensor camera 109 about the pivot shaft at a desired angle θ from the vertical direction and locks it in this position. Thus, the frame can be locked in the tilt position. The degree of the tilt angle can be adjusted according to the kind of the inspection object 106 and the kind and shape of the packaging material of the object 106.

The magnet boosters 105 intensifies the magnetic properties of metallic foreign matter mixed in the inspection object 106 before detection is performed. The frame of the belt conveyor 104 is secured to the top of the support table 102. Rollers are installed at both ends of the frame, and a belt is supported by the rollers so as to rotate endlessly. In Fig. 8, the belt travels from the left to the right. The driving motor 103 serving as a power source is installed at one side of the belt. A pulley of the driving motor 103 is linked to the associated roller through a belt to perform power transmission.

At the center of the belt conveyor 104, the magnet boosters 105, the X-ray detector and the sensor coils 108 are disposed in a straight line in the order mentioned in the travel direction of the belt. The magnet boosters 105 and the sensor coils 108 are provided in pairs, respectively. One and the other of the pair of magnet boosters 105 are respectively installed above and below the belt conveyor 4 with a gap provided between the upper and lower magnet boosters 5 so that an inspection object 6 can pass therebetween. Similarly, one and the other of the pair of sensor coils 108 are respectively installed above and below the belt conveyor 4 with a gap provided between the upper and lower sensor coils 108 so that an inspection object 6 can pass therebetween (see Fig. 9).

The X-ray generator 110 of the X-ray detector is installed below the belt conveyor 104. The line sensor camera 109 of the X-ray detector is installed above the belt conveyor 104. The above-described devices 105, 108, 109 and 110 are covered with respective covers 115, 116, 117 and 119 of sheet metal in order to prevent X-rays generated from the X-ray generator 110 from leaking to the outside. The cover 117 covers the line sensor camera 109 and the magnet boosters 105, which is shown by the chain double-dashed lines in Fig. 8.

Further, in order to prevent external leakage of X-rays from the X-ray generator 110, a cover 120 is installed upstream of a position where the X-rays are applied to the inspection object 106, and a cover 121 is installed downstream of the X-ray irradiation position. Thus, the X-ray detector is designed so that X-rays cannot leak to the outside even when the X-ray generator 110 and the line sensor camera 109 are tilted at a predetermined angle θ.

In addition, a display 111 is installed above the belt conveyor 104 to display operating conditions of the hybrid type foreign matter detecting apparatus 101 and control information. The magnet boosters 105 are similar to the magnet boosters 5 described above with regard to the first embodiment. Therefore, a detailed description thereof is herein omitted.

### [Operation]

The inspection object 106 is transferred on the belt conveyor 104. When the object 106 passes through the magnetic fields produced from the magnet boosters 105, if the object 106 has metallic foreign matter mixed therein, the metallic foreign matter is magnetized. Thereafter, the object 106 being transferred on the belt conveyor 104 passes through the X-ray detector. At this time, X-rays are generated from the X-ray generator 110 and transmitted through the inspection object 106 and then received with the line sensor camera 109.

The X-rays generated from the X-ray generator 110 have an intensity, wavelength and spectral line width optimized so that foreign matter as located at or near the vertical center between the pair of sensor coils 108 can be detected. The X-ray generator 110 and the line sensor camera 109 can be controlled to tilt at a predetermined angle from the vertical position. The inspection object 106 may be packaged not only in a homogeneous, smooth and soft packaging material, such as a bag made of aluminum foil, but also in a cylindrical thick-walled material, such as an iron can.

In such a case, if X-rays are applied to the inspection object 106 in the vertical direction, it is difficult to detect foreign matter attached to the wall of the cylindrical can. If the X-ray intensity is increased to such an extent that the X-rays can pass through the wall of such a cylindrical can, the X-rays undesirably pass through the object 106 in the can, including foreign matter. Consequently, it becomes impossible to grasp the extent of the foreign matter and dark-and-light gradations with the line sensor camera 109. Therefore, the X-ray generator 110 and the line sensor camera 109 are controlled to tilt about the pivot shaft at a predetermined angle from the vertical position, and X-rays are applied to the cylindrical can in this state. By doing so, it is possible to detect foreign matter in the cylindrical can without the need to increase the X-ray intensity to a particularly high level.

To detect foreign matter in a cylindrical can, for example, it is more advantageous to apply X-rays to the can from a direction at a predetermined angle to the vertical direction than from the vertical direction because it is unnecessary to increase the X-ray intensity to a particularly high level so that the X-rays can pass through the wall of the cylindrical can.

After passing through the X-ray detector, the inspection object 106 passes between the sensor coils 108. A beam sensor 118 is installed upstream of the sensor coils 108 (see Fig. 9). The beam sensor 118 is a device that detects the inspection object 106 when passing in front of it with an optical sensor element.

The beam sensor 118 is used to obtain the timing at which the inspection object 106 will pass between the sensor coils 108. A signal output from the beam sensor 118 is transmitted to the computer 114 where it is used for signal processing. The sensor coils 108 preferably use an excitation power source that supplies an electric current of such a frequency and a magnetic field intensity that no eddy current is induced in a metal package used to package the inspection object 106. The sensor coils 108 are similar to the sensor coils 8 described above with regard to the first embodiment. Therefore, a detailed description thereof is omitted.

The computer 114 comprises two parts to perform hybrid detection of foreign matter in the inspection object 106. In one part of the computer 114, signals from the sensor coils 108 and the beam sensor 118 are processed to detect foreign matter. In the other part of the computer 114, an image from the X-ray detector is received and processed to detect foreign matter. The transfer speed of the belt conveyor 104 is adjustable within a predetermined range. The hybrid type foreign matter detecting apparatus 101 can detect various kinds of foreign matter in accordance with the respective sensitivities of the X-ray detector and the sensor coils 108.

### [Example of Traceability System]

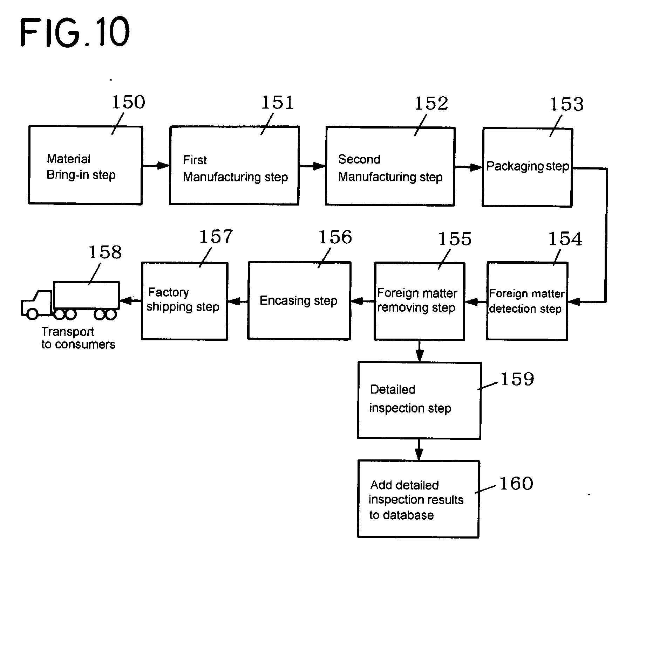

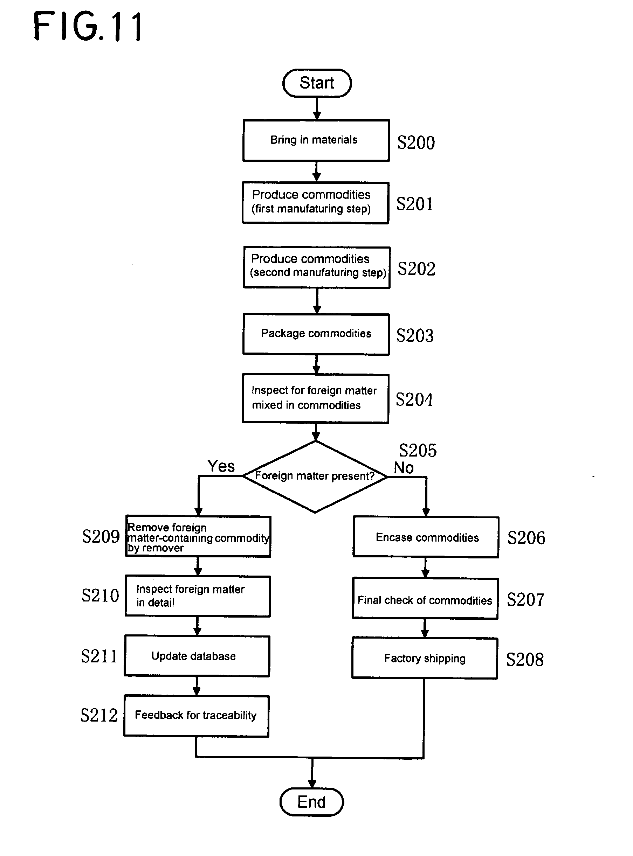

Application of a traceability system using the hybrid type foreign matter detecting apparatus 101 will be described below. Fig. 10 illustrates a general example of a food manufacturing process. The flowchart of Fig. 11 shows the operating procedure in the food manufacturing process. At a material bring-in step 150, materials required for the manufacture of commodities are brought in from material manufactures or agricultural product manufacturing centers. Materials to be brought in include food product materials, materials required for processing the desired food product, and a packaging material for packaging the finished food product.

A first manufacturing step 151 and a second manufacturing step 152 are shown as representatives of steps of producing commodities. At a packaging step 153, produced commodities are packaged individually. A foreign matter detection step 154 detects whether or not foreign matter has gotten mixed in the packaged commodities. The above-described hybrid type foreign matter detecting apparatus 101 is used for detection of foreign matter. A foreign matter removing step 155 removes a commodity judged to contain foreign matter at the foreign matter detection step 154 from among the packaged commodities.

As a means for removing a commodity judged to contain foreign matter, an arm-type or air-type removing device may be used to remove a foreign matter-containing commodity from packaged commodities flowing on a production line. At an encasing step 156, a plurality of packaged commodities are packed per case. At a factory shipping step 157, the encased commodity packages are finally inspected for the number of commodities and checked for delivery addresses. If a pack of commodity packages is found left unlabeled, for example, a necessary label is put thereto. In this way, the encased commodity packages are made ready for shipping from the factory.

At a transport step 158, the encased commodity packages shipped from the factory shipping step 157 are transported to consumers by shipping carriers or the like. A detailed inspection step 159 is for reinspecting in detail a commodity having foreign matter mixed therein. At this step, inspection should preferably be carried out by using various kinds of analyzers of high accuracy. The system should preferably have a registration step 160 for registering the results of the inspection at the detail inspection step 159 into a database.

The operating procedure at each step will be described below with reference to the flowchart of Fig. 11. At the material bring-in step 150, necessary materials are brought into the factory (S200). By using the materials, processing operations are carried out successively at the manufacturing steps 151 and 512 to produce commodities (S201 and S202). Only the first and second manufacturing steps are herein illustrated as representatives. In actuality, the production process consists of a large number of manufacturing steps. At the packaging step 153, finished commodities are packaged in predetermined amounts or in a predetermined number of items per package (S203).

The packaged commodities are inspected at the foreign matter detection step 154 using the hybrid type foreign matter detecting apparatus 101 to detect whether or not foreign matter has gotten mixed in the packaged commodities (S204 and S205). If it is detected by the hybrid type foreign matter detecting apparatus 101 that a packaged commodity contains foreign matter, this commodity is removed from among those flowing on the line at the subsequent foreign matter removing step 155 (S205 and S209).

Packaged commodities free from foreign matter are encased in corrugated cardboard boxes or the like at the subsequent encasing step 156 (S206). The commodities are finally inspected for the number or quantity at the factory shipping step 157 and then shipped from the factory (S207 and S208). The shipped commodities are transported to consumers by transportation means 158. The removed commodity and the foreign matter in the commodity are reinspected in detail by an analysis based on X-ray image information and magnetic response information obtained from the sensor coils or by inspection at the detailed inspection step 159 (S210).

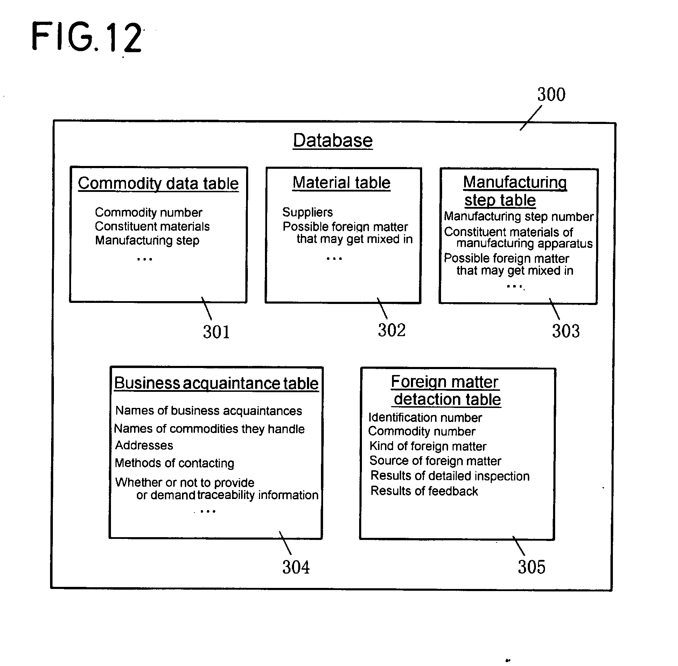

The results of the inspection at the detailed inspection step are stored in a database 300 (see Fig. 12; S211). The data stored in the database 300 is used to effect feedback for traceability of the production process and commodities produced at each manufacturing step (S212). The database 300 is prepared for each factory or for each company running a factory and contains detailed information concerning each step of manufacturing commodities, conditions of manufacture of commodities at each step, facilities used for production, and each production facility, together with the history of materials used.

Fig. 12 illustrates an example of the database 300. The database 300 consists of tables such as a commodity data table 301, a material table 302, a manufacturing step table 303, a business acquaintance table 304, and a foreign matter detection table 305. The commodity data table 301 stores information about commodities that are being produced. Items of data stored in the commodity data table 301 include commodity number identifying commodities, constituent materials of the commodities, manufacturing steps where the commodities are produced, and data indicating whether or not there has been a defective commodity containing foreign matter among produced commodities.

The material table 302 stores items of information concerning kinds and quantities of materials required for the manufacture of commodities, suppliers and date of purchasing of materials, current total stock of materials, and storage conditions of materials. The material table 302 preferably further contains information indicating a kind of foreign matter that may be mixed in the materials. The manufacturing step table 303 contains items of information concerning an identification number of each manufacturing step, each manufacturing apparatus used at the manufacturing step, constituent materials of each manufacturing apparatus, etc. The manufacturing step table 303 preferably has such information that indicates what kind of foreign matter may get mixed in commodities from which manufacturing apparatus or transfer line.

In the case of a cutter for cutting a material into fine pieces, for example, a fragment of the cutting gears of the cutter may get mixed in commodities. If information about the kind of the fragment and the relevant manufacturing apparatus and manufacturing step has previously been stored in the manufacturing step table 303, the stored information can be effectively utilized to identify foreign matter mixed in a commodity product. The business acquaintance table 304 stores information about business acquaintances, such as material suppliers and destinations of delivery of commodities, and information concerning commodities they handle, their addresses, and methods of making contact with them. The business acquaintance table 304 also stores information indicating whether or not to provide or demand traceability information when it is found that foreign matter or the like is mixed in a commodity product.

The foreign matter detection table 305 stores information about foreign matter detected at the foreign matter detection step 154 or the detailed inspection step 159. For example, the foreign matter detection table 305 stores information concerning foreign matter detection when foreign matter is detected at the foreign matter detection step 154 or the detailed inspection step 159, i.e. the identification number, the commodity number, the kind of foreign matter, and the source from which the foreign matter got mixed in the commodity product. In addition, the foreign matter detection table 305 stores the results of inspection at the detailed inspection step 159. The foreign matter detection table 305 preferably further stores the results of feedback for traceability.

These tables 301 to 305 are used while being updated whenever necessary. By searching the database 300, it is possible to retrieve information showing which commodities have been produced through what steps, and to know specific foreign matter that may get mixed in commodities. In other words, if foreign matter is detected in a commodity product and judged to be a fragment of metal, a piece of plastics, a hair, etc., it is possible by searching the database 300 to detect from which step the foreign matter got mixed in the commodity product.

Information about foreign matter detected at the detailed inspection step 159 is added to the database 300 whenever necessary. Feedback can also be effected by grasping what kind of foreign matter is being detected in real time by using a special-purpose program for retrieving the history of detected foreign matter and transmitting the information about the detected foreign matter to the production line in which the foreign matter got mixed in the commodity product. The database 300 may be shared among a plurality of factories, material suppliers, distributors and consumers to make smooth use of traceability.

### Industrial Applicability:

The present invention is used for foreign matter detection of products such as food products, beverages, pharmaceuticals, etc. during or after the production. The present invention may also be used in the field of manufacturing industrial products, e.g. coating materials.

### Brief Description of the Drawings:

[Fig. 1] Fig. 1 is a diagram illustrating the outline of a hybrid type foreign matter detecting apparatus according to a first embodiment of the present invention.
[Fig. 2] Fig. 2 is a diagram illustrating the outline of an X-ray tube.
[Fig. 3] Fig. 3 is a diagram illustrating the outline of an X-ray detector.
[Fig. 4] Fig. 4 is a diagram illustrating the outline of detection of metallic foreign matter with sensor coils.
[Fig. 5] Fig. 5 is a graph showing the detection sensitivity of sensor coils.
[Fig. 6] Fig. 6 is a diagram illustrating the outline of an X-ray system.
[Fig. 7] Fig. 7 is a diagram illustrating the outline of an X-ray system.
[Fig. 8] Fig. 8 is a perspective view showing the outline of a hybrid type foreign matter detecting apparatus according to a second embodiment of the present invention.
[Fig. 9] Fig. 9 is a front view of the hybrid type foreign matter detecting apparatus 101.
[Fig. 10] Fig. 10 is a diagram illustrating a general example of a food manufacturing process.
[Fig. 11] Fig. 11 is a flowchart showing the operating procedure at each step of the food manufacturing process in Fig. 10.
[Fig. 12] Fig. 12 is a conceptual view showing an example of a database for traceability.

### Explanation of Reference Numerals:

- 1, 101: hybrid type foreign matter detecting apparatus
- 2, 102: support table
- 3, 103: driving motor
- 4, 104: belt conveyor
- 5, 105: magnet booster
- 6, 106: inspection object
- 7: X-ray detector
- 8, 108: sensor coil
- 9: signal processing unit
- 10, 110: X-ray generator
- 11: slit
- 12: CCD camera
- 13: fluorescent screen
- 14: mirror
- 15, 16: inspection object
- 17: acrylic resin
- 20: heater power supply
- 21: heater coil
- 22: X-ray tube
- 23: nickel tube
- 24: cathode
- 25: anode
- 26: power source
- 27: window
- 28: target
- 109: line sensor camera
- 111: display
- 112: line sensor controller
- 113: X-ray controller
- 114: computer
- 118: beam sensor
- 300: database
- 150: material bring-in step
- 151: first manufacturing step
- 152: second manufacturing step
- 153: packaging step
- 154: foreign matter detection step
- 155: foreign matter removing step
- 156: encasing step
- 157: factory shipping step
- 158: transport step
- 159: detailed inspection step
- 160: registration step
- 301: commodity data table
- 302: material table
- 303: manufacturing step table
- 304: business acquaintance table
- 305: foreign matter detection table

## Claims

1. A hybrid type foreign matter detecting apparatus comprising:
conveying means for transferring an object under inspection;
magnetizing means for magnetizing magnetic foreign matter in foreign matter mixed in said object under inspection;
an X-ray system for detecting whether or not said foreign matter is present in said object under inspection, said X-ray system including X-ray generating means for generating X-rays from a cathode and an anode that are put in a vacuum tube, and X-ray receiving means for receiving said X-rays transmitted through said object under inspection;
electromagnetic wave detection means having a pair of sensor coils for detecting whether or not said magnetic foreign matter is present in said object under inspection; and
signal processing means for detecting said foreign matter by parallel processing an output signal from said sensor coils and an X-ray system output signal from said X-ray system.

2. A hybrid type foreign matter detecting apparatus according to claim 1, wherein said X-ray system is disposed between said magnetizing means and said electromagnetic wave detection means.

3. A hybrid type foreign matter detecting apparatus according to claim 1 or 2, wherein said X-ray generating means and said X-ray receiving means are disposed on a single oscillating axis, so that said object under inspection is inspected at an angle to a vertical axis by tilting said oscillating axis.

4. A hybrid type foreign matter detecting apparatus according to claim 1 or 3, wherein said X-ray generating means is installed below said conveying means, and said X-ray receiving means is installed above said conveying means, and wherein said oscillating axis is tilted at a predetermined angle (θ) from a vertical direction to inspect said object under inspection.

5. A hybrid type foreign matter detecting apparatus according to claim 1 or 3, wherein said X-ray generating means is magnetically shielded by a ferromagnetic material to prevent said cathode and said anode from being influenced by a magnetic field produced by said magnetizing means.

6. A hybrid type foreign matter detecting apparatus according to claim 1 or 3, wherein said X-ray generating means generates X-rays having an intensity, wavelength and spectral line width optimized so that said foreign matter as located in a vicinity of a vertical center between said pair of sensor coils can be detected.

7. A hybrid type foreign matter detecting apparatus according to claim 1 or 6, wherein said pair of sensor coils are connected to form a balanced or non-balanced bridge circuit, and an AC voltage is applied to said bridge circuit, causing said sensor coils to produce alternating magnetic fields, so that when said magnetic foreign matter passes near said sensor coils, said alternating magnetic fields change, causing an output current/voltage of said bridge circuit to change, thereby delivering a sensor coil output signal.

8. A hybrid type foreign matter detecting apparatus according to claim 7, wherein said sensor coils use an excitation power source that supplies an electric current of such a frequency and a magnetic field intensity that no eddy current is induced in a metal package used to package said object under inspection.

9. A traceability system comprising:
said hybrid type foreign matter detecting apparatus according to any of claims 1 to 8;
a database for previously storing data concerning a production process for producing a commodity, production machine facilities used for production of said commodity, and materials used for production of said commodity, and for registering, whenever necessary, information concerning said object under inspection and/or said foreign matter; and
a computer that analyzes the information concerning said object under inspection and/or said foreign matter by using said data alone or in liaison with another traceability system to implement traceability to trace a history of production of said commodity.
